# EUROPÄISCHE PATENTSCHRIFT

(11) **EP 0 616 404 B1**
(45) Veröffentlichungstag und Bekanntmachung des Hinweises auf die Patenterteilung: **20.08.1997**
(21) Anmeldenummer: 94102261.8
(22) Anmeldetag: 15.02.1994
(51) Int. Cl.: H02G 3/22, H02G 9/10, F16L 5/02

(54) **Anschlusstück**
Connector piece
Connecteur

(30) Priorität: 13.03.1993 DE 4308070
(43) Veröffentlichungstag der Anmeldung: 21.09.1994
(73) Patentinhaber: THYSSEN POLYMER GMBH, 81601 München (DE)
(72) Erfinder: Bauer, Peter, D-94357 Konzell (DE); Helf, Walter, D-94315 Straubing (DE); Lederer, Roland, D-93049 Regensburg (DE)

(56) Entgegenhaltungen:
- DE-A- 3 336 075
- DE-A- 3 436 987
- DE-C- 3 527 250

## Beschreibung

Die Erfindung bezieht sich auf ein Anschlußstück für Rohrleitungen und Schächte, gemäß dem Oberbegriff des Anspruchs 1.

Solche Anschlußstücke sind an sich bekannt. Sie sind unter anderem in der DE-OS 33 36 075 beschrieben und dienen dazu, Kabel usw. durch Wände, Kabeleinführungsplatten etc. dicht hindurchzuführen. Allerdings weisen diese bekannten Anschlußstücke gewisse Nachteile auf, die auf einer geänderten neuen Kabelführungstechnik beruhen. Wurden früher ausschließlich dünnwandige Kabelführungsrohre z.B. aus PVC eingesetzt, so sind heute dickwandige Kabelführungsrohre aus Polyethylen im Einsatz, was zur Verringerung des Nutzquerschnittes und zu Stoßstellen im Übergangsbereich führt, wenn die bekannten Anschlußstücke mit Anschlußstutzen aus dünneren Materialien verwendet werden. Anschlußstücke mit Abzweig- und Anschlußstutzen aus den neuen Kabelführungsrohren entsprechenden dickwandigen Rohren, sind aber wegen der Platzverhältnisse im Anschlußstutzen und den vorgesehenen Mauerdurchführungen, Kabeleinführungsplatten etc. nicht möglich.

Der Erfindung, wie sie im Anspruch 1 beschrieben ist, liegt daher die Aufgabe zugrunde, bekannte Anschlußstücke so zu verbessern, daß die vorgenannten Nachteile nicht mehr auftreten und das Anschlußstück universell für Kabelzüge älterer und neuer Bauart einsetzbar ist.

Die Vorteile des mit der Erfindung vorgeschlagenen Anschlußstückes sind darin zu sehen, daß der Nutzquerschnitt der externen Rohre in den Abzweigstutzen unverändert durch die Platte geführt wird, d.h. es gibt keine Stoßstelle beim Durchführen von Kabeln.

Ein weiterer Vorteil ist durch die größere Länge 1 gegen h gesehen, dadurch ragen die Abzweigstutzen innen über den Rand des Anschlußstutzens. Somit ist es möglich, die Abzweigstutzen durch dicke Wände oder langgestreckte Anschlußbereiche in Gebäudewänden von Vermittlungsstellen zu führen, so daß die Enden der Abzweigstutzen innen zugänglich sind, z.B. für das Anschließen von Druckluft (zum Einblasen von Kabeln), zum Anordnen von Abdichtelementen und zum Anbringen von Kennungen der Abzweigstutzen untereinander.

Vorteilhafte Ausgestaltungen der Erfindung sind in den abhängigen Ansprüchen beschrieben. Ein Vorteil liegt darin, daß die externen Rohre aus einem Rohrverband bestehen, dessen Einzelrohre in gleicher Länge (als Verband) zum Anschließen am Anschlußstück abgeschnitten werden. Um in den Abzweigstutzen eine Dichtung anordnen zu können, werden die Dichtungen nun versetzt angeordnet, was durch eine unterschiedliche Länge der Aufweitungen der Abzweigstutzen möglich wird.

Von Vorteil ist auch die Kennzeichnung der einzelnen Abzweigstutzen, die gleich sein soll mit der Kennzeichnung der externen, anzuschließenden Rohre. Dadurch kann im Inneren eines angschlossenen Gebäudes erkannt werden, welches externe Rohr am jeweiligen Abzweigstutzen außen angeschlossen ist. Außerdem entsteht ein gegen Gas und Wasser druckdichter Rohranschluß an den Abzweigstutzen.

Bei Vermittlungsstellen ragen Stahlrohre (ohne Dichtungselemente) orgelpfeifenartig aus der Gebäudewand.Um einen gegen Gas und Wasser druckdichten Anschluß des Anschlußstückes zu erreichen, kann eine Dichtung angeordnet werden.

Die Erfindung ist nachstehend anhand eines in den Abbildungen dargestellten Ausführungsbeispieles näher erläutert.

Es zeigt:
- Fig. 1: eine Seitenansicht des Anschlußstückes,
- Fig. 2: eine Ausführungsvariante der Fig. 1 und
- Fig. 3: eine Draufsicht auf die Fig. 1.

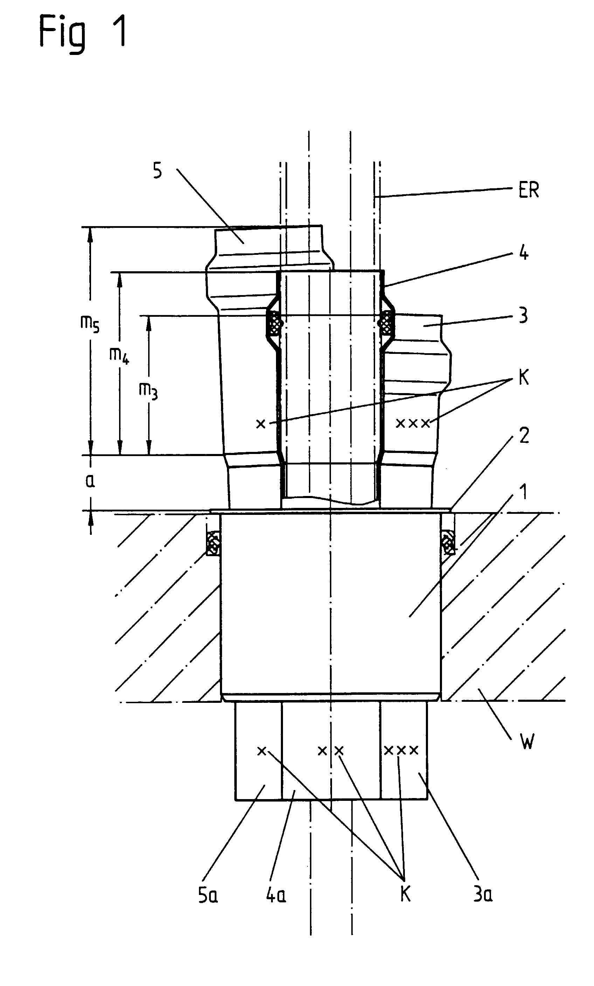

Die Fig. 1 zeigt ein außen glattes, in eine Wand, Kabeleinführungsplatte (W) oder dergl. einsetzbares Anschlußstück 1, das mit einer Platte 2 abgedeckt ist, mit drei Abzweigstutzen 3, 4, 5 für in den Abbildungen nur einfach dargestellte externe Kabelführungsrohre ER. Diese Kabelführungsrohre ER werden in die Muffen der Anschlußstutzen 3, 4, 5 so eingesetzt, daß die darin befindlichen Kabel durch das Anschlußstück 1 gezogen werden können. Die Abzweigstutzen 3, 4, 5 setzen sich hinter dem Anschlußstück als deren Verlängerungen 3a, 4a, 5a fort, so daß sie mit den internen Kabelführungsrohren über deren Muffen verbunden werden können. Das Anschlußstück 1 wird dabei mit einer Wand dem Mauerwerk oder dergl. W fest verbunden. Die Abzweigstutzen 3, 4, 5 sind dabei auf der der Öffnung des Anschlußstutzens 1 gegenüberliegenden Seite so aufgeweitet, daß dickwandige externe Rohre ER anschließbar sind, deren Innendurchmesser di1 sich in gleicher Größe im Abzweigstutzen 3,4,5 fortsetzt, wobei der Außendurchmesser der Abzweigstutzen gegenüber den externen Rohren ER so reduziert ist, daß der Umkreis der Anschlußstutzen im Durchdringungsquerschnitt der Platte 2 kleiner ist, als der Innendurchmesser der Anschlußstutzen. Die Längen dieser Aufweitungen der Abzweigstutzen 3, 4, 5 sind unterschiedlich und jeweils mit m3, m4, m5 bezeichnet. Die der Platte 2 zugewandten Enden der Aufweitungen haben bei allen drei Anschlußstutzen den gleichen Abstand a von der Platte 2, wobei die Längen 1 der Abzweigstutzen 3, 4, 5 auf der Öffnungsseite des Anschlußstückes 1 größer ist, als dessen Länge h.

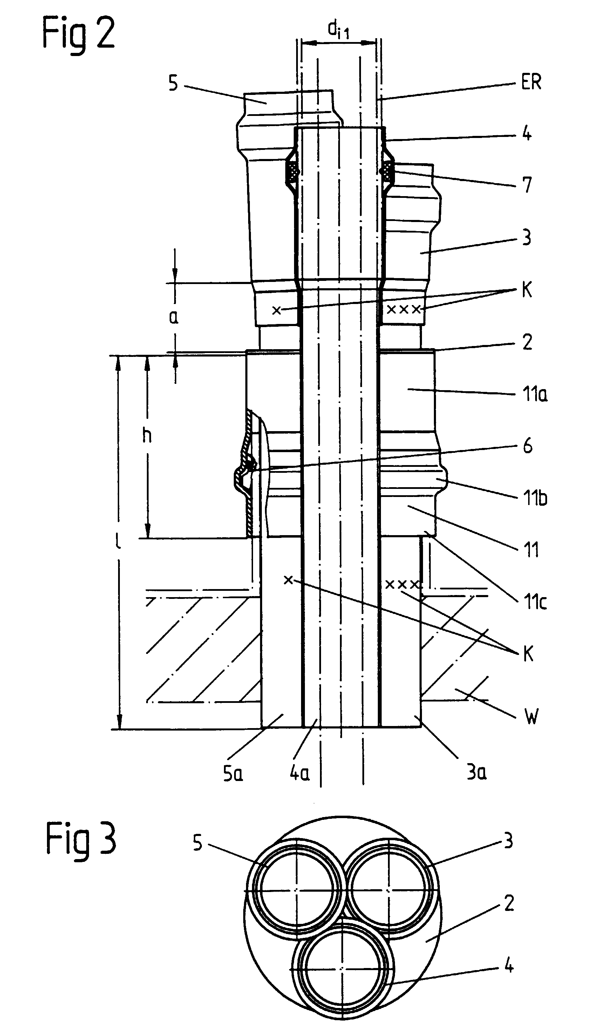

Das Anschlußstück 11 gem Fig. 2 ist im Gegensatz zum Anschlußstück 1 der Fig. 1 mit einer Muffe und Dichtelement 6 ausgerüstet. Die Anschlußstutzen 3, 4, 5 selbst können ebenfalls mit einem Dichtelement 7 versehen sein.

Zur einfacheren Montage der Kabelzüge sind die Anschlußstutzen innerhalb und außerhalb des Anschlußstückes 1, bzw. 11, d.h. innerhalb und außerhalb der Mauer oder dergl. W jeweils mit gleichen Markierungen x, xx, xxx versehen.

## Patentansprüche

1. Anschlußstück für Rohrleitungen und Schächte, vorzugsweise bei Fernmeldekabelanlagen, mit einem einseitig offenen Anschlußstutzen (1,11), der auf der der Öffnung gegenüberliegenden Seite mit einer Platte (2) abgedeckt ist, die mindestens zwei Öffnungen aufweist, an die Abzweigstutzen (3,4,5) mit einem kleineren Durchmesser als der des Anschlußstutzens (1,11) angeordnet sind, und die Abzweigstutzen (3,4,5) auf der der Öffnung des Anschlußstutzens (1,11) gegenüberliegenden Seite so aufgeweitet sind, daß externe Rohre (ER) anschließbar sind, **dadurch gekennzeichnet, daß** die Ausweitungen zur Aufnahme dickwandiger externer Rohre (ER) geeignet sind, deren Innendurchmesser (dᵢ₁) sich in gleicher Größe im Abzweigstutzen (3,4,5) fortsetzt, daß der Außendurchmesser der Abzweigstutzen (3,4,5) im Durchdringungsquerschnitt der Platte (2) gegenüber den externen Rohren (ER) so reduziert ist, daß der Umkreis der Abzweigstutzen (3,4,5) in diesem Bereich kleiner ist, als der Innendurchmesser des Anschlußstutzens (1,11) und daß die Länge (1) der Abzweigstutzen (3a,4a,5a) auf der Öffnungsseite des Anschlußstutzens (1,11) größer ist, als die Länge (h) des Anschlußstutzens (1,11).

2. Anschlußstück nach Anspruch 1, **dadurch gekennzeichnet, daß** die Längen (m3, m4, m5) der Aufweitungen der Abzweigstutzen (3,4,5) zur Aufnahme der externen Rohre (ER) unterschiedlich sind, wobei die der Platte (2) zugewandten Enden der Aufweitungen in gleichem Abstand von der Platte enden.

3. Anschlußstück nach Anspruch 1 und 2, **dadurch gekennzeichnet, daß** die Abzweigstutzen (3,4,5) über ihre Gesamtlänge oder innerhalb und außerhalb der Platte (2) so gekennzeichnet sind, daß eine Identifikation des jeweiligen Abzweigstutzens (3,4,5) auf beiden Seiten der Platte möglich ist.

4. Anschlußstück nach einem der Ansprüche 1 bis 3, **dadurch gekennzeichnet, daß** die Abzweigstutzen (3,4,5) mit einem Dichtelement (7) ausgestattet sind.

5. Anschlußstück nach einem der Ansprüche 1 bis 4, **dadurch gekennzeichnet, daß** der Anschlußstutzen (1,11) mit einem Dichtelement (6) ausgestattet ist.

## Claims

1. Connecting piece for pipe lines and shafts, preferably with telecommunications cable equipment, with a unilaterally open connecting sleeve (1,11) covered on the side opposite the opening with a plate (2) having at least two openings to which branching sleeves (3, 4, 5) with a smaller diameter than that of said connecting sleeve (1,11) are arranged, and said branching sleeves (3, 4, 5) being sufficiently expanded on the side opposite the opening of said connecting sleeve (1,11) to enable external pipes (ER) to be connected thereto, **characterized in that** said expansions are adequate to receive thick-walled external pipes (ER), whose internal diameter (dᵢ₁) extends with the same size within said branching sleeve (3, 4, 5), that said external diameter of said branching sleeves (3, 4, 5) is reduced in the penetration section of said plate (2) opposite said external pipes (ER), that the periphery of said branching sleeves (3, 4, 5) is smaller in this area than the internal diameter of said connecting sleeve (1,11) and that the length (I) of branching sleeves (3a, 4a, 5a) on the opening side of said connecting sleeve (1,11) is larger than the length (h) of said connecting sleeve (1, 11).

2. Connecting piece according to claim 1, **characterized in that** the lengths (m3, m4, m5) of the expansions of said branching sleeves (3, 4, 5) for receiving said external pipes (ER) are different, with the ends of said expansions showing to said plate (2) ending at the same distance from said plate.

3. Connecting piece according to claim 1 and 2, **characterized in that** said branching sleeves (3, 4, 5) are marked over their overall length or within and without said plate (2) to permit an identification of the relative branching sleeve (3, 4, 5) on either side of said plate.

4. Connecting piece according to any of claims 1 to 3, **characterized in that** said branching sleeves (3, 4, 5) are equipped with a seal element (7).

5. Connecting piece according to any of claims 1 to 4, **characterized in that** said connecting sleeve (1,11) is equipped with a seal element (6).

## Revendications

1. Pièce de raccordement pour tuyauteries et puits, préférablement pour installations de câbles de télécommunication, avec un raccord (1, Il) ouvert unilatéralement et couvert du côté opposé à l'ouverture avec une plaque (2) ayant au moins deux ouvertures auxquelles sont disposés des raccords de branchement (3, 4, 5) ayant un diamètre plus réduit que celui du raccord (1, 11), les raccords de branchement (3, 4, 5) étant élargis du côté opposé à l'ouverture du raccord (1, 11) pour permettre de raccorder des tuyaux externes (ER), **caractérisé en ce que** les élargissements sont convenables pour recevoir des tuyaux externes à paroi épaisse (ER), dont le diamètre interne (dᵢ₁) s'étend avec la même grandeur au-dedans du raccord de branchement (3, 4, 5), que le diamètre externe des raccords de branchement (3, 4, 5) est tellement reduit dans la section transversale de trversement de la plaque (2) par rapport aux tuyaux externes (ER) que la périphérie des raccords de branchement (3, 4, 5) dans ce domaine est plus réduite que le diamètre interne du raccord (1, 11) et que la longueur (l) des raccords de branchement (3a, 4a, 5a) du côté de l'ouverture du raccord (1, Il) est plus grande que la longueur (h) du raccord (1, 11).

2. Pièce de raccordement suivant la revendication 1, **caractérisée en ce que** les longueurs (m3, m4, m5) des élargissements des raccords de branchement (3, 4, 5) pour recevoir les tuyaux externes (ER) sont différentes, avec les extrémités des élargissements tournées vers la plaque (2) finissant à un écartement pareil de la plaque.

3. Pièce de raccordement suivant la revendication 1 et 2, **caractérisée en ce que** les raccords de branchement (3, 4, 5) sont marqués sur toute leur longueur ou au-dedans et au-dehors de la plaque (2) de façon à permettre une identification des raccords de branchement (3, 4, 5) correspondants des deux côtés de la plaque.

4. Pièce de raccordement suivant la revendication 1 à 3, **caractérisée en ce que** les raccords de branchement (3, 4, 5) sont munis d'un élément étanchéifiant (7).

5. Pièce de raccordement suivant la revendication 1 à 4, **caractérisée en ce que** le raccord (1, 11) est muni d'un élément étanchéifiant (6).
